# EUROPEAN PATENT APPLICATION

(11) **EP 2 184 685 A1**
(43) Date of publication of application: **12.05.2010**
(21) Application number: 08019498.8
(22) Date of filing: 07.11.2008
(51) Int. Cl.: G06F 17/27, G06F 17/28

(54) **Method for semantic processing of natural language using graphical interlingua**

(71) Applicant: Lingupedia Investments SARL, 1116 Luxembourg (LU)
(72) Inventor: Mende, Michael, 69245 Bammental (DE)
(74) Representative: Ullrich & Naumann

(57) **Abstract**

A method for processing natural language using a language processing system is described herein. Written or spoken text is input to the language processing system. The method includes the step of analysing the text syntactically. Next a step of extracting components of the text and their relation to each other within the text follows. A graph or graphical representation of the text is generated or used as a language independent representation of the meaning of the text. This graph or graphical representation is used to perform modelling, knowledge representation and processing at the language processing system.

## Description

The present inventions relates to a method for processing natural language using a language processing system, wherein written or spoken text is input to said language processing system.

Processing natural language using technical means is problematic in the art. Natural language consists of a sequence of words which are arranged in a specific manner and which expresses a certain meaning. Strongly simplified, one might try to analyse the text by looking at the sequence word by word. Unfortunately, isolated analysis of single words is not able to retrieve the meaning of the sequence correctly. In some cases it will be successful, very often the analysis will fail, as a text is more than just a clustering of words. The sentence "colourless green ideas sleep furiously" is formed with words which are ordered syntactically correct. But it can be easily seen that this sentence is completely meaningless. A system which only focuses on the single words would try to process the sentence, where it is obvious that it can't be processed reasonably.

Therefore some systems known in the art use a semantic check. These systems use lexicons which combine words with attributes. At performing a semantic check the attributes have to be consistent. For example, the words "animal" is specified as being "living", a stone as "not living" and "eat" as "living". Using this kind of semantic check, the sentence "the stone eats grass" can be specified as wrong, because stones are not living, whereas the sentence "the animal eats grass" is correct, because both "animal" and "eat" are living.

These decisions are claimed to represent the process of understanding in artificial intelligence. Unfortunately this approach is very limited. At processing natural language, sentences are generally much more complex and cannot be handled by such systems. Great efforts are made to solve this problem. On one hand there are positions claiming that programming of semantics is impossible. On the other hand there are companies who invest Millions into research in the area of semantics. Yet, no system known in the art is capable of processing natural languages properly.

It is therefore an object of the present invention to improve and further develop a method for processing natural language which is capable to handle the semantics of the text which is input to a language processing system.

In accordance with the invention the aforementioned object is accomplished by a method comprising the features of claim 1. According to this claim, such a method is characterized by the step of analysing said text regarding its syntax and morphology, the step of extracting components of the text and their relation relative to each other, the step of generating or using a graph or graphical representation of said text as languages independent representation of the meaning of said text, and the step of performing processing of said text using said graph or graphical representation.

According to the invention, it has first been recognized that the problem can be solved by using findings in the neurological field. One basic finding relates to the fact that human cognition clearly separates syntax and semantics. If several people with different languages are sitting together and there is an umbrella in the room, everyone "knows" that this is an umbrella. But this "knowing" does not mean that the word "umbrella" is activated anywhere in a brain of a person present. Only for communication purposes the object "umbrella" is tagged with a language specific word. The people involved know the object without using language. Only if they want to go outside while it is raining, they activate their "tag" by means of the language-specific dictionary for communication purposes. They will for instance ask "May I have this umbrella?".

This clear separation of syntax and semantics (or of language dependent information and language independent information) is transferred to the method according to the invention. In a first step, the text which is input in the language processing system is analyzed regarding its syntax and morphology. At this step, the grammatical structure is analyzed. This results in a first basic understanding of the text. In the next step, the single components of the text are extracted. The text generally consists of sentences which comprise subject, object and verb, respectively. Each component can be extracted and their function within the sentence can be retrieved. These single components and their relation to each other are used in the next step of generating a graph or graphical representation of said text. The single components form nodes of the graph and the relation between the components are represented by edges. It has been found, that this graph or graphical representation can be made completely independent to the languages which is used with the text which is input to the system. The graph only contains semantic information which can be easily used for further processing.

At a graphical representation, the components of the text are represented graphically without using a graph. This for instance includes the representation using video, audio or the like.

Alternatively or additionally to the step of generating a graph or graphical representation, an already existing graph or graphical representation can be used at a step of using a graph or graphical representation. This graph or graphical representation describes knowledge which is already present at the language processing system. At this step, the components extracted from the text are matched with elements of the existing graph or graphical representation. Thereby a subset of the existing graph or graphical representation is determined.

According to a particularly preferred embodiment, the text input to the language processing system is modelled in a visual-graphical way. This results in a visual-graphical model which is a language-independent representation of the text and which can be understood by each user of the language processing system. Thus the users do not have to have knowledge about the languages involved. This is also true if the user does not understand any language used at the language processing system.

At the step of analysing text, information about the grammar of the language used in the text has to be present. Each language has its own specific grammar concerning to which words are arranged. To enable users without any programming knowledge to write grammars, grammatical data might be entered by means of a grammar editor. Preferably, this grammar editor is language independent. Only a certain formalisation of the possible structures of the languages is required at hand. By that, time-consuming development of different grammars for every single language can be avoided and instead, quick and efficient prototyping is possible. That way, new languages can be integrated into the language processing system quickly and easily. The grammars generated by the grammar editor might be used with language analysis as well as generation of language.

Preferably the step of analysing the text is performed by a syntactic layer of the language processing system. The language processing system might be configured modularly which enables reusability and modularity of the system. A syntactic layer might perform segmentation and tokenization of the text. Segmentation indicates the determination of the sentential units of the text, where tokenization means the identification of the concrete word forms within the sentence. At performing segmentation and tokenization, the single elements as well as their relationship within the sentence can be analysed in terms of syntax and morphology.

To improve modularity and to gain a method which can be universally used, the syntactic layer might be docked to the language processing system. Doing so, different languages can be easily integrated into the language processing system by adding a new syntactic layer to the system. As the processing within the system is performed with a language independent representation of the text, any language can be processed using the method concerning the invention. Texts in new languages just have to be transformed to the language independent representation. This can be performed by docking a new syntactic layer to the language processing system. Thus, the method can be used rather universally.

Each language docked to the language processing system might be represented in a separate syntactic layer. Thus, syntactical issues can be configured completely independent of each other.

Furthermore, it is possible that single languages can have common parts of the syntactic layer. For instance High German, Swiss German and Austrian German have great parts of grammar in common. Only several rules will differ. In this case the syntactic layer can have a part which is common to several languages and might have parts which are specific to a specific language. This reduces the work of changing rules of the single languages and facilitate the entry of data used at the syntactic layer. Thereby abstractions of languages can be re-used with the single syntactic layers.

Language independent information might be extracted at a relational layer. Generally, language independent information comprises objects, actions and attributes and their relations. Objects are usually represented by nouns in languages like German, English or Chinese. Actions are generally described by the verbs of the text. But also adjectives can represent action. For instance two companies can be tagged with "compete" or "being competitor". Attributes can be sensory attributes like colour, temperature, size or quality as well as attributes like emotions. These objects, actions and attributes are extracted form the text by the syntactic and relational layer and are sent to the semantic layer.

At the step of generating the graph or graphical representation, objects, actions and attributes of a sentence or phrase of the text are linked together and represented as a graph or graphically. The graph representation facilitates the processing of the text within the language processing system, as graphs can be easily represented as matrices. Though graphs can also be represented graphically, a pure graphical representation (without being a graph) might be more powerful, as it offers greater flexibility regarding representation capability.

To ensure the language independency of the language processing system, objects, actions and attributes can be represented graphically. For instance a car can be represented by a pictogram of a car, a bench can be represented by a pictogram of a bench, the attribute "green" can be a green area, "to give" can be represented by pictograms of a person handing over an object to another person or by video and "to bark" can be represented by a sound. Thus, the graphical representation of the semantic can be understood by everyone without the objects, actions or attributes being tagged with terms of a specific language.

The step of processing the text might comprise the step of reasoning over the extracted semantics of the text. This can be done by comparing the extracted semantics with a model or determining the distance between the entities involved.

A central part of the method might be a meaning world. The meaning world represents the object world. The object world's main task is to represent objects which are usually represented by nouns in languages like German, English or Chinese. It consists of several two-to-n-dimensional spaces storing the objects (or prototypes of them) and orders them in meaningful combinations.

The objects of the object world can be organised using structure trees or structure networks which link the single objects logically. It has been found that humans organize knowledge about objects of the world and their relations in a meaningful structure. This organization is done in a non-uniform way. They are using concepts and categories for storing and sorting information. Such a grouping of categories can exist for electronic devices (e.g. computer, printers, and digital phones), paper (e.g. letter, document, and invoice), buildings (e.g. houses, museums, and offices), etc. The single objects of a category can be linked to other categories. For instance an office building has several rooms which are equipped with furniture, electronic devices, papers, etc. The furniture might comprise desks, chairs or bookshelves. On the other hand, a chair might be an office chair as well as a rocking chair. Both are chairs but fulfil completely different purposes. In this manner the single words are linked together in categories.

The meaning world further comprises an action space which is responsible for the representation of actions. Actions can be connected to any other unit in the meaning world, for instance the unit that is tagged with the English word "withdraw" can be bound to the objects "person", "money" and "cash point" being the actors involved. Such connections are called molecules.

Further the meaning world might contain an attribute space which contains attributes of elements. Most, if not all attributes can be quantified in some natural manner. Sensory attributes like colour, taste, size or pressure have a one-to-three-dimensional representation used in various contexts. Colours for instance can be reproduced using a colour spindle which is defined by hue, saturation and brightness of the desired colour. Also emotions can be defined using a multidimensional representation. Concerning to a model proposed by psychologists, a six or eight dimensional emotional simplex can be used to superpose all emotions of a human being. Thus, also emotions can be represented in a language independent way.

The language representation of the text might be ambiguous. E.g. in the sentence "the chicken is ready to eat", the chicken can be interpreted either as the eater or as the dish that will be eaten. At the sentence "we saw the man with the telescope", the telescope can be either in possession of the man or "we" have it. These ambiguities can be resolved from the context of the sentence. This context can be retrieved from the meaning world. If the previous sentences relate to a farming surrounding, the chicken is most likely the eater. When the previous sentences refer to cooking, the chicken is most likely the one which will be eaten. This context related issues might be retrieved from the meaning world.

An ambiguous text will correspond to several graph or graphical representation, where the number of representation is the number of meanings which can be retrieved from the text. Using the meaning world, the representation which is most likely true can be determined.

In the language processing system, there might be a relational layer which links the syntactic layers and the semantic layer. This relational layer might contain abstractions about possible relations between the objects in the layers. The relational layer receives information output by the syntactic layer and performs further generalization and abstraction.

Concerning one embodiment of the invention the method might be used in a translation system. In this case the step of processing comprises the step of generating a translation of the text to a language different to the original language of the text. As the graph or graphical representation is language independent, it can be the basis of the translation to any language. At performing the steps of the method, first the original text is analysed regarding its syntax and morphology. Second the components of the text and their relations to each other are extracted and this information is used for generating a graph or graphical representation of the text or for using an existing graph or graphical representation as language-independent representation. After an optional semantic checking, the language-independent representation is transferred to a textual representation. This step of transferring can be performed by the syntactic layer, as this layer uses syntactical and morphological information of the target language. Resulting from the modular configuration of the system, each language can be theoretically translated into each other language. As there is a language independent platform in between, each language just has to be related to the language independent representation. Thus, no dictionaries linking the single languages with each other are necessary. This extremely facilitates the development of an automatic translation system.

According to another embodiment of the invention, the method can be used for searching since it is capable of improving the results of search engines tremendously. A user types a question into the website of a search engine. This question is analysed syntactically and morphologically, and the components of the text and their relations are extracted. This information is used in generating an internal graphical representation of the question. Ambiguities can be determined and resolved. Further, by leaving the string-based approach, single words of the question can be generalized using abstractions in the structure trees. Thus, the quality of the results can be improved.

Concerning another embodiment of the invention, the method can be used at analysing a text. It is possible to retrieve the topics presented in a text. This can be used to categorize a text automatically. Further it can be used to find logical chains or information about semantic structures in the text.

Concerning to another embodiment of the invention, the method can be used for generating responses on the text input to the language processing system. For instance the system can generate an automated answer on a question which is sent by a user requesting support. In contrast to methods known in the art, the method can analyse and "understand" the text and can create a appropriate answer to the question using the knowledge represented in the meaning world model.

Further embodiments are possible. As the method offers a language independent representation of a text, the step of processing can be replaced by a vast number of different steps. Thus, the invention can be used very universally. Further the single embodiments described herein can be combined arbitrarily if desired.

With each embodiment the text generated at the step of processing might be output to the user as written or spoken language or as depiction. If the step of processing comprises the step of analysing the text, the output can also comprise statistics or a list of topics or input for searching.

For improving and facilitating the building of the databases used within the system, the knowledge needed at the steps of the method according to the invention might be input via a web interface. The knowledge might include lexicon tags, content of the meaning world model, grammar information, attribute representation or the like. This information can be input by an open ground of users who enter the information in a user friendly way.

There are several ways how to design and further develop the teaching of the present invention in an advantageous way. To this end it is to be referred to the patent claims subordinate to claim 1 on the one hand, and to the following explanation of a preferred example of an embodiment of the invention illustrated by the drawing on the other hand. In connection with the explanation of the preferred example of an embodiment of the invention by the aid of the drawing, generally preferred embodiment and further development of the teaching will be explained. In the drawings:
- Fig. 1: shows a structure of a translation process,
- Fig. 2: is a graphical representation of a sentence,
- Fig. 3: is a possible representation of actions, and
- Fig. 4: shows representations of temperature (part a)) and emotions (part b)).

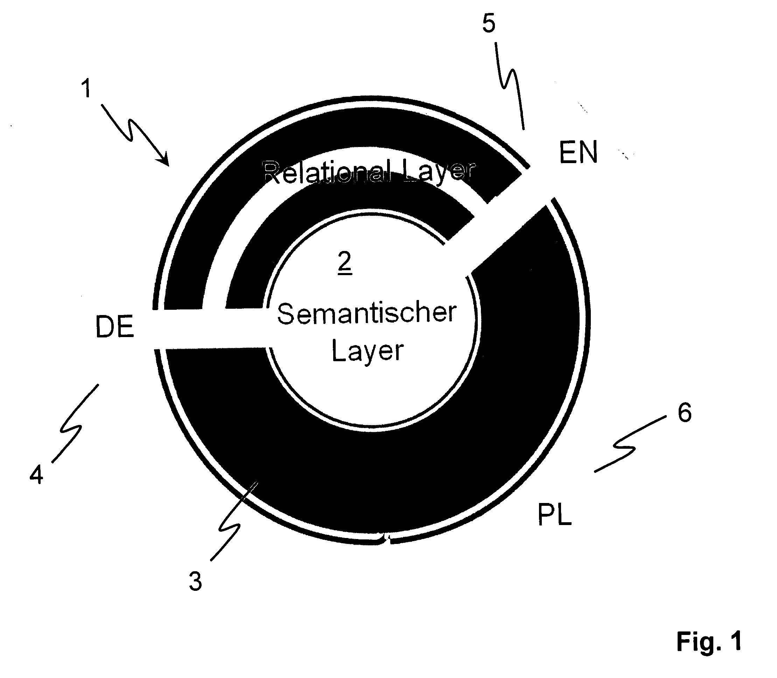

Fig. 1 shows an example of a translation process using the method concerning the invention. The sentence "die grüne Bank steht im Wald" should be translated using the invention. Fig. 1 shows the semantic layer 2 which is the core of the language processing system 1. The semantic layer is embedded in a relational layer 3. To this relational layer 3, several syntactic layers 4, 5, 6 are docked. Each syntactic layer represents a language: syntactic layer 4 represents German, syntactic layer 5 represents English and syntactic layer 6 represents Polish.

The text input to the language processing system 1 is input at the syntactic layer 4. The syntactic layer 4 analyse the text concerning its grammar and syntax. It can be retrieved that a "Bank" is the subject of the sentence. The "Bank" has the attribute "grün". The "Bank" performs the action "stehen" and this is done in the "Wald". This can be extracted by a syntactical and morphological analysis of the text.

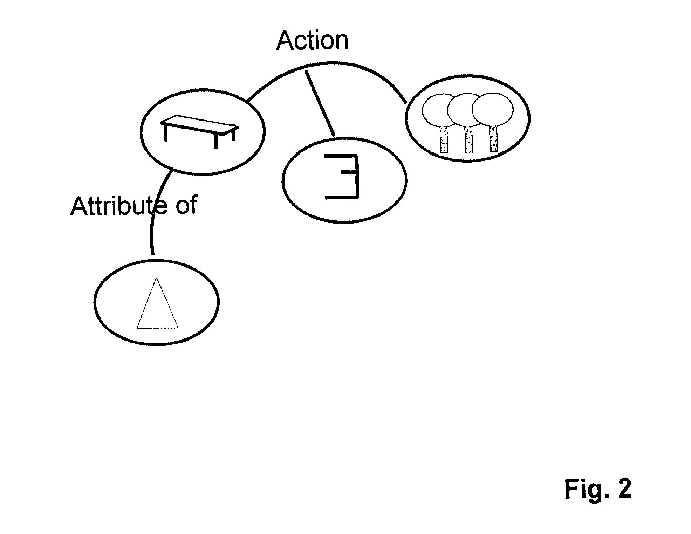

As became obvious, the components of the text and their relation to each other can be extracted. This can be used to generate a universal, language-independent representation of the sentence which is shown in Fig. 2. This graph can be transformed to English or any other language available. In a first step the pictogram representing the "Bank" is translated to the English word "bench". The attribute of the bench of being "grün" is translated to "green", the action "stehen" is translated to "is", and the representation of the "Wald" is tagged with the word "forest". Translating this representation to an English sentence will result in "the green bench is in the forest".

As can be seen from the example, by tagging graphical representation with another language and by putting the words in a grammatically correct order each language can be a source and a target language, respectively.

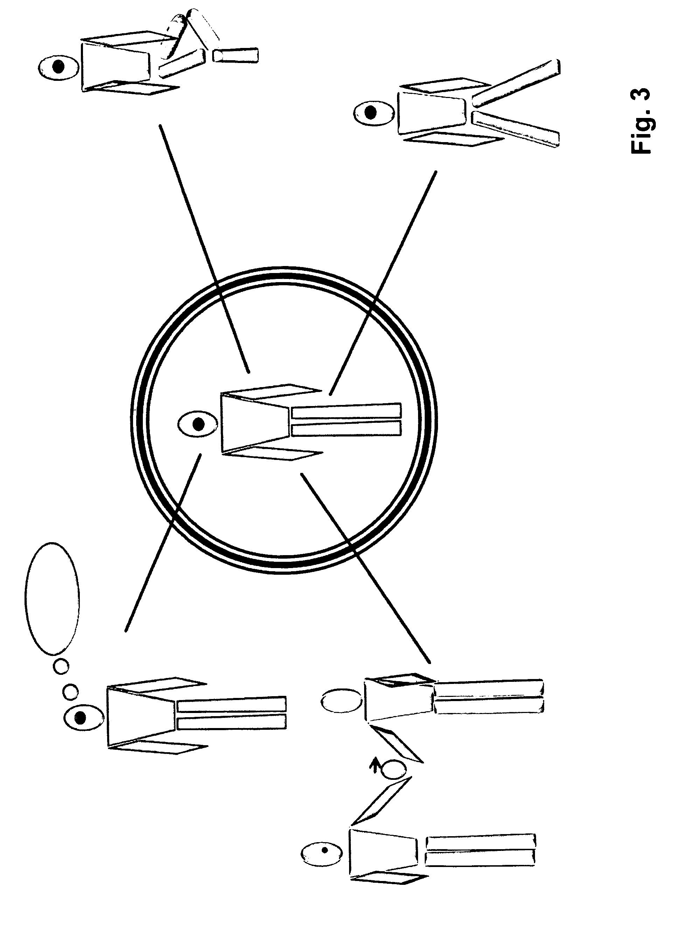

Fig. 3 represents several possible actions performed by a human being who is shown in the centre. The actions "think", "sit", "walk" and "give" are shown.

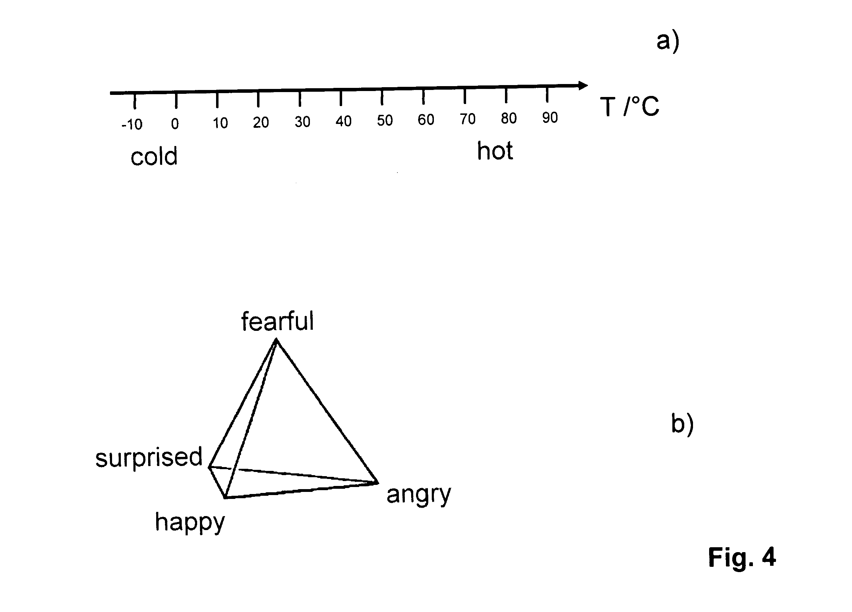

Fig. 4 shows sample representations of two attributes. Fig 4a) represents a temperature scale and the corresponding attributes. Generally these representations are fuzzy and cannot refer to a specific value. Warm dishes will be perceived as cold, if they have 10 °C or less. They will be denoted as lukewarm at temperatures of 20 °C. Temperatures of 70 °C will be sensed as hot.

Fig. 4b) depicts a 4-dimensional space for representing emotions. The emotions which can be represented are a superposition of the simplex "fearful", "surprised", "happy" and "angry". An emotion represented here is a point or a region within this 4-dimensional space.

Referring to an exemplary embodiment of the invention some basic features of the invention are summarized in the following text. It should be regarded as an example which supports the understanding of the teaching of the invention.

In the following the language processing system will be referred to as "Lingupedia" which is a brand of the Lingupedia Investments **Sàrl**, Luxemburg. Lingupedia is a modular system for automated translation of text.

Lingupedia employs a completely modular design for multilingual Natural Language Processing and multimodal interaction. Modules of any type can be combined into a working system being able to analyse, reason about, search in, translate and generate natural language. The system handles multimodal interaction: written and spoken natural language input and output, as well as output as language, speech, depiction or a combination of them. The modules are designed in a way to be reusable by different other programs, either within the Lingupedia system, e.g. by both analysis and generation, or by other software programs. Where possible, the modules are language independent, thus ensuring reusability. Well-defined interfaces and general interfacing programs manage the communication between the system components. By this design, every language can be translated into every other language. Languages to be translated can be even variations within a single language, e.g. Swiss German is translated into High German, or colloquial style is translated into formal style. The core features of Lingupedia are:
- modular: easy to handle, reusable, configurable
- web-based: accessible from everywhere
- software-ergonomically highly sophisticated: usable by everyone
- community-based: extendable by everyone
- universal: every language can be integrated
- visual-graphical core: language independent and cognitively adequate

The central idea of the Lingupedia system is an approach to model and simulate human cognitive processing for the optimization of natural language understanding and generation, translation, search engines, or other communication tasks.

Most algorithms are based on an orthographical form which means just a symbolism or a byte string without any meaning. Even ontologies use this approach "house is-a building", sometimes with mathematical distances or spaces, but they always use this meaningless byte chains. The byte chains have the major disadvantage that they often do have multiple meanings which might comprise no meaning at all: a dog may be a pet, a grab hook, a cramp iron,...

A human cognition based approach like Lingupedia clearly separates syntax and semantics according to the human brain processes and it differentiates among the multiple meanings of words. Syntactic rules or language-dependent word forms are handled in specific components. Semantics is processed in a language independent layer, the Lingupedia Meaning World (LMW). This approach is based on recent findings in neurological research. An example: If several people with different languages are sitting together and there is an umbrella in this room everyone "knows" that this is an umbrella. But this "knowing" does not mean that the word "umbrella" is activated in any way in the brain of a person present. Only for communication purposes the object "umbrella" is tagged with the language specific word. The people involved know the object without using language. If they want to go outside while it is raining, they activate the "tag" by means of the language-specific dictionary but only to communicate with other humans: "May I take this umbrella?" or "Könnte ich diesen Schirm nehmen?"

The advantage of the Lingupedia approach is that the meaning is represented in a human way and is therefore language independent. Thus all natural languages can be added, since they are using the same meaning world. Lingupedia's claim is: Not only can translation, but any job or software using natural language be optimized by our approach. In the core component LMW, information can be added, processed and stored without special language syntax being necessary. As soon as an information unit is present in LMW, new languages can be added very easily by means of binding the syntactical representation to the language independent unit.

Also users' meanings can be stored language independently: E.g. a company which produces a special printer can derive this printer from a given printer template in LMW, adapt the derived printer with the specific parts and tag it with one or more languages. Images with parts' and features' descriptions can be easily derived from LMW for a defined language. Thus multilingual product information (like documentation, marketing information, or error reports) can be generated automatically from the language independent meaning world. Customer communication in various languages and forms (Emails, letters, phone calls) can be automated, i.e. analysed, interpreted, distributed to different departments and generated for response to the customer.

Besides this CRM (Customer Relationship Management) application, LMW is usable as a fast and efficient information search machine because, in terms of mental representation, it is closer to human knowledge representation than other approaches. Linupedia's method is both superior to classical string based search (requiring exact matches on the level of orthographic form) and recent semantic web search (requiring a special annotation of texts in which information is to be searched).

A core method within LMW is the tagging method. To simplify the navigation within LMW, the language specific so called tagging can be activated. If e.g. English tagging is activated and the user navigates to an umbrella, the tagging algorithm queries the English dictionary for an entry, displaying it for the user. Thus, users of another language receive assistance in finding the desired information.

Knowledge within the LMW is represented in different worlds. Generally "object world", "Structure trees/networks", "Action space", and "Attribute space is used.

The Object world's main task is to represent objects which are usually represented by nouns in languages like German, English or Chinese. It consists of several two-to-n-dimensional spaces storing the objects (or prototypes of them) and orders them in meaningful combinations.

These objects are organized in structure trees or networks. Humans organize knowledge about objects of the world and their relations in a meaningful structure. This organization is done in a non-uniform way. They are using concepts and categories for storing and sorting information. Such a grouping of categories can exist for "electronic devices" (computer, printer, digital phone), or "papers" (letter, document, invoice).

The action space part of LMW is responsible for the representation of actions. Actions can be connected to any other unit in LMW, e.g. the unit that is tagged with the English "withdraw" or the German word "abheben" can be bound to the objects "person", "money" and "cashpoint" being the actors involved. Actions don't have to be necessarily verbs: a molecule by means of an action bound e.g. to two companies can be tagged with "compete" or "being competitor". Such connections are called molecules.

The attribute space is structured in a straightforward way, also as far as usability is concerned. Most, if not all attributes can be quantified in some natural manner. Sensory attributes like color, taste, size or pressure already have a 1 to 3-dimensional representation used in various contexts.

Parts of Lingupedia are also the following further representations and algorithms:
- Integration of external resources of knowledge representation
- Depictions for a natural presentation of units in LMW
- Graphical relations between units in LMW
- Clustering for topics in texts
- Statistical analysis for disambiguation
- Multidimensional scaling for computing similarities

Besides the components described above, there are the following parts of Lingupedia designed for the modelling of specific natural languages:
- language independent grammar editor for the definition of grammars for each language
- Lexi-Wikis for the definition of words for each language
- Dictionary with multi-purpose configurability

Usually dictionaries don't provide an exact meaning: A dictionary gives the following English-to-German translations for dog: Anschlag, Bauklammer, Finger, Gerüstklammer, Greifhaken, Hund, and German-to-english translations for Hund: canine, dog, hound. So, several different meanings are given for a single word. LMW can differentiate between these meanings in a sophisticated way. This means that there are first the language independent meaning representations like a hairy animal, which is English-tagged with the word "dog", or a special part of a gantry which is also tagged with the same orthographic form "dog" (in German "Gerüstklammer"). Thus, if a usual dictionary has 30.000 entries in English, LMW will need some 100.000 meaning representations. The language independent meaning can be resolved by looking at the context: Is this dog-tagged object used in a building site domain or is it combined with an action tagged with the verb bark or walk? Once the meaning is clear by finding the correct unit in LMW, translation or further processing can be done better than with any existing system.

Lingupedia can a) use and integrate existing external resources from the web and b) open all components of Lingupedia for public access - the language-specific syntactic components as well as the language independent semantic area LMW. Furthermore, right from the start and even more with a growing LMW, it is very easy to integrate the syntactic part of a new language because only a simple tagging has to be done. Lingupedia provides a linguistic toolkit for quick-and-easy tagging by non-expert users without special knowledge and covering every human language.

In the following some details of the components will be described.

Within an object world, all semantic entities are represented in a language independent way. The representation is graphical, i.e. visualized in different forms. Semantic entities correspond to abstract or real-world objects that live in a sort of "archetypal" world. They are organized in two-to-n-dimensional spaces and in meaningful structures.

Simple objects can open up new worlds. For example, the moon can lead to another space like the orbit. Or the representation of a human being can lead to a space which simulates the cellular basis or body parts of human beings. Relations of objects can be represented for example in a town with buildings, parks, and gardens. A building can be a private, public or an office building. This building contains offices; offices contain objects like desks, computers, shelves, clocks or papers. That way objects are related spatially or functionally to a knowledge domain which is represented by an office or building. The objects might consist of parts; a clock for example can consist of a mechanical mechanism and a display with the parts hour and minute hand. The Euclidean distance of objects in this archetype world represents the dissimilarity between two objects. The Euclidean distance in the semantic space is not equivalent to real world Euclidean distance. It is based on dissimilarity or functional closeness.

LMW uses associative networks or directed trees as a knowledge representation. The user can go from an object, e.g. "document" object lying on the desk of the graphical world to a corresponding tree to find e.g. the object "monition". Every object can be bound to multiple structure trees, e.g. the paper-object to "papers" and also to a tree of "materials" with sister nodes like wood, metal etc.

In LMW, there are different types of relations within networks: One type of a relation can be "is-a". Here, an object is a subtype of the parent node comprising the supertype. Subtypes inherit properties of their supertypes. Multiple inheritance is possible. This "is-a" tree is used for the translation of subtypes which don't have a tagging in the target language. Instead of the specific term, the more general supertype is verbalized ("document" instead of "letter", "take" instead of "withdraw") or a synonym or the negated phrasing of an antonym is chosen. Besides hyponymy, other relations are also used for deduction and translation: closeness, relatedness, instance-of, member-of, frame-relatedness, similar-to, synonymy, antonymy, meronymy, etc. Languages differ in their lexical inventory. This network of relations allows a flexible way of generating natural language within a system which has to handle every language and where the various languages lack certain words either for language-immanent reasons or because they are not yet tagged in the Lingupedia system. Units in LMW can be artificial in the way that they are only part of structure trees. This holds for some relations or constructed nodes.

Especially for actions, a visualized representation is cognitively adequate since a verbalized definition is hard to understand and less intuitive for users than a visual one. Movies, graphics displaying motions or schematic depictions are used to illustrate the different actions. The action space is also used for the representation of thematic roles of verbs or other entities. The thematic roles relate an action to its agents, themes, goals etc. The roles are either defined by the user or deducted from the properties of the action displayed graphically. This is an elegant and intuitive way of assigning an internal, thematic structure to actions and events. This knowledge about the roles involved is used for disambiguation and for correct generation of the target sentence.

Attributes of objects can be an emotional scale, a colour representation or physical attributes like temperature, size or quality. A stock e.g. can be bound to a two-dimensional space that represents a number scale representing currency units. Other units like actions can be bound to this space which may be tagged with "raise" or "drop". Like the action space, the attribute space can be connected to other units in LMW. A colour can be bound to an object which is tagged with "car". The attribute space itself can be multidimensional. Attributes can represent a structure tree, e.g. "scarlet", "carmine", and "crimson" are subtypes of "red". That way the units of the meaning world are connected to each other in multiple ways in a network allowing complex deductions necessary for processing natural language.

External resources can be linked into the system so that knowledge representations available on the Internet can be used within the components of the system. Resources to be linked are for example DBpedia, Wiktionary, Open Street Map, scientific taxonomies, ontologies from the Semantic Web^{®}, users' own taxonomies, etc. Highly sophisticated consistency check components verify the consistency of the different representations and enable correct computing over the entirety of the heterogenous knowledge sources. Even different media types can be integrated such as graphics, videos, and audio. Different interpretation or translation algorithms allow handling various types of representations.

Avatars represent human beings or animals. Avatars are - like all objects in LMW - derived from others. Thus an inherent hierarchy by means of derived objects is given. The thinking of human beings works - this is an hypothesis of the authors - also in finite world simulations: If humans imagine withdrawing money from a cashpoint they don't use words "I, bank, cashpoint, withdraw". Instead, they use a language independent "mental image" or "mental scene" to imagine the process. They even can simulate whole stories - e.g. in dreams - without using their body. They imagine their body in an artificial brain simulated environment. Later on, the LMW shall serve as a platform for such simulations by means of artificial intelligence.

Various relations are also modelled graphically. Spatial, temporal, causal or metaphorical relations between entities (and also the other types of relations) are ideally suited for a graphical depiction. For translation, these kinds of relations are the base for determining by which structures and wordings they are to be expressed verbally because languages differ in the way they express these relations: some languages use prepositions, others realize them as morphemes attached to a noun, etc. Based on a neutral, abstract and graphical representation is the best way to generate adequate structures and wordings, and is cognitively adequate. By this method, the generation component doesn't need to do a complex restructuring of the input structure (as is done by classical machine translation systems), but simply chooses between the available structures of the target language using a mapping from relations to structures. These mapping algorithms have been developed for the generation of every language to be integrated.

Knowledge about topics improves the translation by filtering ambiguous meanings that do not belong to these topics. For several topics, there will be many clusters in the N-dimensional semantic space. Efficient and fast clustering algorithms are used to find the cluster centers like the k-means clustering algorithm. These Cluster centroids represent the topics of the text. If there are ambiguous translations, the topic can be used to resolve them.

The syntactic analysis of the text often creates many syntax graphs and some unresolved connections between graph nodes. A statistical approach to choose the best graph is used: Bayes' theorem. It states that the probability of a certain graph given the evidence (the semantic entities) is proportional to the likelihood of the semantic entities to be in that graph times the prior probability of that entity being in that graph.

Very often users will not be able to position semantic entities absolutely, but they will very well be capable of telling the dissimilarity to other semantic entities. Multidimensional scaling is employed, an algorithm designed to place multidimensional points based on a dissimilarity matrix, that is a matrix containing the distances (or dissimilarity) to other semantic entities. These algorithms can be fuzzy, which is necessary, as no two people will choose exactly the same distance. They will rather have a consensus of a general strength (as in "far away" or "very close to").

Part of the Lingupedia system is the world's first language independent grammar editor: users without any programming knowledge can write grammars. Only a certain formalization of the possible structures of the language at hand is required. By that, time-consuming development of different grammars for every single language can be avoided and instead, quick and efficient prototyping is possible. That way new languages can be plugged in quickly and easily. The grammars are used by both the language analysis and generation components. This concept of modularity and reusability of components is applied to the following syntactic representations and processes:
- language independent, i.e. universal, abstract representation of grammatical structure
- grammars for analysis and generation
- syntactic-morphological rules for analysis and generation

Graphical user interfaces, called Lexi-Wikis, allow users to enter words into the language-specific lexicon. Lexi-Wikis do not require any expert knowledge about the language at hand, but are designed to be usable by everybody. From the respective words, the tools generate example sentences to be simply selected or modified by the user. Which forms and how many word forms have to be presented to the user is determined by different language-specific inflectional algorithms. The user-selected examples are translated into a complex representation which can be processed by the program. The underlying morphological method uses linguistic knowledge and frequency information to determine the minimum of information the user has to provide. It thus anticipates the most probable word forms so that as few as possible word forms and as few as possible actions are required from the user. By this method, the mental load or the intelligence is transferred from the user side to the software side.

The dictionary method is designed as a universal, multi-purpose master dictionary for all sorts of natural language applications and for all types of languages. The dictionary proposes a new level of representation: the phrase level which is settled between single words and complete sentences. So, the units of a language can be handled in a very flexible way on a continuum word - phrase - sentence. Multiword expressions, so far a major problem for most natural language systems, can be represented in a more or less fixed structure: from being not-varying and not-modified at all (having a fixed form and no internal structure), to having an internal structure with certain restrictions (semantic, syntactic, lexical, pragmatic, stylistic etc.), up to being open for modifications of any type.

The dictionary method provides a mechanism for annotating the entries with features usable for various natural language applications: morphological features for morphological analysis and generation, syntactic features for syntactic analysis and generation, semantic features for semantic processing, pragmatic features for pragmatic processing, and dialogue-related features for the efficient design of natural language dialogues. To explain the feature-based method: processing natural language by using their surface forms (the string) is not ideal since every variation and equivalent or related form has to be handled separately. This approach is not efficient: laborious and error-prone for the programmer and giving the user no flexibility in interacting with the software e.g. in a dialogue: he/she has to use the exact strings the software is prepared for; otherwise he/she is not understood at all. By using features a higher level of scientific abstraction is employed, resulting in a more flexible and more natural way of interaction.

Besides linguistic information used for written language interaction, the dictionary also stores information about the pronunciation of words which is usable for audio input and output that is both speech recognition and synthesis. Conversion algorithms are integrated. They translate the internal form of the pronunciation representation into another one to be further processed by various types of software or to be presented to the user. Thus, this information is usable for different applications in a flexible way. A configuration tool allows selecting exactly the parts of the dictionary which are needed by different applications.

By storing base forms instead of full forms (the latter being common for speech-related software), the dictionary employs a both efficient and flexible form of representation and processing and allows the dynamical generation of all possible inflectional, derivational and compound forms. A generation algorithm which produces the different word forms while ensuring the correct pronunciation derived from and adapted to the internal structure of words is part of the system. The dictionary also provides a method for representing various relations between lexicon entries. The relations refer to different language-processing tasks, e.g. for an abbreviation which is normally not used in speech but in written language. If it is to be used in speech synthesis, its full form is represented to make it pronouncable. Or, if an entry is to be found by a search engine, its various orthographic and inflectional forms are irrelevant for the job of searching, although until now they had to be represented explicitly. With Lingupedia's approach they are related and can easily be found.

Many modifications and other embodiment of the invention set forth herein will come to mind the one skilled in the art to which the invention pertains having the benefit of the teaching presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for processing natural language using a language processing system, wherein written or spoken text is input to said language processing system,
**characterized by** the steps of
analyzing said text regarding its syntax and morphology,
extracting components of the text and their relation relative each other,
generating or using a graph or graphical representation of said text as language independent representation of the meaning of said text, and
performing processing of said text using said graph or graphical representation.

2. Method according to claim 1, wherein said text is modeled in a visual-graphical way, wherein the visual-graphic model is language-independent, thus enabling users to extend the language processing system without having knowledge about the languages involved.

3. Method according to claim 1 or 2, wherein grammatical data used at the step of analyzing is entered to the language processing system by means of a language-independent grammar editor.

4. Method according to any one of claims 1 to 3, wherein the step of analyzing is performed by a syntactic layer of the language processing system which performs segmentation and tokenization of said text, wherein the syntactic layer can be docked to the language processing system.

5. Method according to claim 4, wherein each language which should be processed by the language processing system is represented in a separate syntactic layer, whereby abstractions of other languages can be re-used within the single syntactic layers.

6. Method according to claim 4 or 5, wherein further abstraction and generalization of data generated by the syntactic layer is performed by a relational layer, wherein said data preferably describes relations between objects and abstractions of that.

7. Method according to any one of claims 4 to 6, wherein language independent information of said text is extracted at said syntactic and relational layers, wherein the language independent information is sent to a semantic layer, and wherein the language independent information comprises objects, actions, and attributes.

8. Method according to any one of claims 1 to 7, wherein at the step of generating the graph or graphical representation, objects, actions, and attributes of a sentence or phrase are linked together.

9. Method according to claim 8, wherein the objects, actions, and attributes are represented graphically.

10. Method according to any one of claims 1 to 9, wherein the step of processing comprises the step of reasoning over the information within a meaning world model, thereby checking the extracted semantics of said text for consistency.

11. Method according to any one of claims 1 to 10, wherein the step of processing comprises the step of generating a translation of said text in a language different to the original language of said text, wherein said graph or graphical representation is the basis of the translation.

12. Method according to any one of claims 1 to 11, wherein the step of processing comprises the step of analyzing said text for purpose of searching or other language processing tasks.

13. Method according to any one of claims 10 to 12, wherein the step of processing comprises the step of generating a response to said text using information given in the meaning world model.

14. Method according to any one of claims 1 to 13, wherein the text generated at the step of processing is output to the user as written or spoken language or as depiction.

15. Method according to any one of claims 1 to 14, wherein knowledge used at the single steps is input using a web interface designed for usability by everyone, wherein the knowledge may include lexicon tags, content of a meaning world model, grammar information, and attribute representation.
